# EUROPÄISCHE PATENTSCHRIFT

(11) **EP 1 298 012 B1**
(45) Veröffentlichungstag und Bekanntmachung des Hinweises auf die Patenterteilung: **30.07.2008**
(21) Anmeldenummer: 02021125.6
(22) Anmeldetag: 23.09.2002
(51) Int. Cl.: G01S 17/93, G01S 7/48

(54) **Verfahren zur Erkennung und Verfolgung von Objekten**
Method for recognizing and tracking objects
Procédé de reconnaissance et de poursuite d'objets

(30) Priorität: 28.09.2001 DE 10148060
(43) Veröffentlichungstag der Anmeldung: 02.04.2003
(73) Patentinhaber: IBEO Automobile Sensor GmbH, 22179 Hamburg (DE)
(72) Erfinder: Lages, Ulrich, Dr., 21031 Hamburg (DE); Fürstenberg, Kay, 89075 Ulm (DE); Dietmayer, Klaus, 89075 Ulm (DE); Sparbert, Jan, 89160 Dornstadt (DE)
(74) Vertreter: Manitz, Finsterwald & Partner GbR

(56) Entgegenhaltungen:
- EP-A- 0 631 154
- DE-A- 19 926 559
- US-A- 6 125 191
- FUERSTENBERG K ET AL: "Object tracking and classification using laserscanners pedestrian recognition in urban environment" IEEE INTELLIGENT TRANSPORTATION SYSTEMS CONFERENCE PROCEEDINGS, 25. August 2001 (2001-08-25), Seiten 451-453, XP010555813
- EWALD A ET AL: "Laser scanners for obstacle detection in automotive applications" INTELLIGENT VEHICLES SYMPOSIUM, 2000. IV 2000. PROCEEDINGS OF THE IEEE DEARBORN, MI, USA 3-5 OCT. 2000, PISCATAWAY, NJ, USA,IEEE, US, 3. Oktober 2000 (2000-10-03), Seiten 682-687, XP010529017 ISBN: 0-7803-6363-9

## Beschreibung

Die vorliegende Erfindung betrifft ein Verfahren zur Erkennung und Verfolgung von Objekten auf der Basis von von einem Sensor, insbesondere einem Laserscanner, erfaßten, geschwindigkeits- oder tiefenaufgelösten, Bildpunkte enthaltenden Bildern von Gegenständen in einem Sichtbereich des Sensors, bei dem die Erkennung und Verfolgung unter Verwendung eines jeweils einem der Objekte zugeordneten Modells für die zeitliche Entwicklung von dynamischen Zustandsvariablen erfolgt, die wenigstens eine sensorspezifische Eigenschaft des Objekts beschreiben, wobei das Modell einen Modelltyp hat und durch wenigstens einen Modellparameter parametrisierbar ist, bei dem aus den Bildpunkten des aktuellen Bildes Segmente gebildet werden, die jeweils einen einzelnen Bildpunkt oder eine Menge aller Bildpunkte umfassen, von denen jeweils mindestens zwei entsprechend wenigstens einem Segmentierungskriterium als dem Segment zugehörig definiert werden, und die untereinander keine gemeinsamen Bildpunkte aufweisen, bei dem zur Neubildung von Objekten jeweils aus wenigstens einem Segment ein neues Objekt gebildet wird, und bei dem bei der Erkennung und Verfolgung von Objekten in einem Bild Segmente bereits vorhandenen Objekten zugeordnet werden.

Verfahren der obengenannten Art sind grundsätzlich bekannt. Bei der Benutzung eines Fahrzeugs, an dessen Frontseite ein Sensor zur Erfassung geschwindigkeits- oder tiefenaufgelöster Bilder, beispielsweise ein Laserscanner, angebracht ist, kann ein solches Verfahren dazu benutzt werden, den in Fahrtrichtung vor dem Fahrzeug liegenden Bereich zu überwachen. Insbesondere können dabei sich in dem Sichtbereich des Laserscanners bewegende Fahrzeuge erkannt und verfolgt werden, so daß auf der Basis der durch die Objektverfolgung erfaßten Daten entsprechende Reaktionen in dem Fahrzeug, beispielsweise Warnmeldungen oder sogar Eingriffe in die Steuerung des Fahrzeugs, ausgelöst werden können.

Bei Verfahren der obengenannten Art tritt jedoch das Problem auf, daß bei der Neubildung von Objekten sehr leicht für einen einzigen Gegenstand, von dem mehrere getrennte Segmente erfaßt wurden, anstatt eines Objekts mehrere getrennte Objekte gebildet werden. Dies führt dazu, daß Gegenstände unter Umständen nicht richtig erkannt werden und beispielsweise ein Personenkraftwagen, der in einem Bild durch zwei getrennte Segmente in Erscheinung tritt, für zwei Motorräder gehalten wird, was für nachfolgende Anwendungen ein schwerwiegendes Problem darstellen kann.

Die Veröffentlichung "Object Tracking and Classification using Laserscanners - Pedestrian Recognition in urban environment", Kay Fürstenberg et al., 2001 IEEE Intelligent Transportation System Conference Proceedings, Oakland, CA, USA, 25. bis 29. August 2001, beschreibt ein Verfahren mit den Merkmalen des Oberbegriffs des Anspruchs 1.

DE 199 26 559 A1 beschreibt ein Verfahren zur Detektion von Objekten im Umfeld eines Straßenfahrzeugs, bei dem Stereobildpaare verwendet werden, wobei eine entfernungsbasierte Bildsegmentierung mittels Stereobildverarbeitung und eine Objekterkennung in den segmentierten Bildbereichen durchgeführt wird. Zur Objekterkennung können Objekthypothesen ermittelt werden, welche durch Vergleich von Objektmodellen verifiziert werden.

US 6,125,191 A beschreibt ein Obiekterfassungssvstem für ein Fahrzeug, umfassend: einen an dem Fahrzeug angebrachten Abstandssensor, welcher in der Lage ist einen Abstand zwischen dem Fahrzeug und einem Objekt das vor dem Fahrzeug in einer Längs- und einer Ouerrichtung bezüglich des Fahrzeugs angeordnet ist, beruhend auf dem Senden eines Signals zu dem Objekt welches vor dem Fahrzeug liest, und dem Empfang eines von dem Objekt reflektierten Signals zu erfassen, um das Objekt beruhend auf Ausgangsdatenwerten von dem Abstandssensor zu erfassen ein Koordinatenentwicklungsmittel zum Zuordnen der Ausgangsdatenwerte von dem Abstandssensor zu XY-Koordinaten, welche eine Y-Achse aufweisen, die die Längsrichtung bezüglich des Fahrzeugs wiedergibt, und eine X-Achse aufweisen, die die Querrichtung bezüglich des Fahrzeugs wiedergibt, ein Zellenaufteilungs- und Zählmittel zum Aufteilen der XY-Koordinaten in Richtung der X- und der Y- Achse bei vorbestimmten Abständen in eine Mehrzahl von Zellen, zum Zählen einer Anzahl an Ausgangsdatenwerten die in den Zellen angeordnet sind, und zum Ausgeben der XY-Koordinaten und der Anzahl an Datenwerten für jede Zelle als Zelleninformation, und ein Obiekterkennungsmittel zum Zuordnen gleicher Kennzeichnungen zu Zellen, die einander benachbart sind beruhend auf der von dem Zellenaufteilungsmittel ausgegebenen Zelleninformation und zum Bestimmen baryzentrischer Koordinaten für jede Kennzeichnung.

EP 0 631 154 A1 beschreibt ein Verfahren zur Objektvermessung mittels intelligenter Entfernungsbildkamera, bei dem ein Entfernungsbild in Echtzeit aufgenommen, ein elektrooptischer, scannender Sensor verwendet und das Entfernungsbild mit Algorithmen und online auf einem Rechner ausgewertet wird.

Es ist Aufgabe der vorliegenden Erfindung, ein Verfahren der obengenannten Art bereitzustellen, das eine möglichst zuverlässige Erkennung von Gegenständen gewährleistet und bei dem insbesondere die Gefahr, daß ein Gegenstand, der in einem geschwindigkeits- oder tiefenaufgelösten Bild als Ansammlung mehrerer getrennter Segmente erscheint, nicht als einziger Gegenstand erkannt wird, gering ist.

Die Aufgabe wird gelöst durch ein gattungsgemäßes Verfahren mit den Merkmalen des kennzeichnenden Teils des Anspruchs 1.

Das erfindungsgemäße Verfahren ist dadurch gekennzeichnet, daß zur Klassifizierung von Objekten mehrere Objektklassen vorgesehen werden, die wenigstens eine Eigenschaft von Objekten betreffen, die aus wenigstens einem der geschwindigkeits- oder tiefenaufgelösten Bilder bestimmbar ist, und daß zur Neubildung eines Objekts Segmente nur solchen neuen Objekten zugeordnet werden, die einer der vorgegebenen Objektklassen angehören.

Bei dem gattungsgemäßen Verfahren werden Bilder eines Sensors benutzt. Hierbei kann es sich um zweidimensionale Bilder eines Videosensors handeln.

Es werden jedoch bevorzugt geschwindigkeits- oder tiefenaufgelöste Bilder eines Sensors verwendet. Unter einem geschwindigkeits- bzw. tiefenaufgelösten Bild eines Sensors wird in dieser Anmeldung eine Menge von bei einer Abtastung des Sichtbereichs des Sensors erfaßten Bildpunkten verstanden, denen Punkte bzw. je nach Auflösung des Sensors auch Bereiche eines von dem Sensor erfaßten Gegenstands entsprechen, wobei den Bildpunkten der Geschwindigkeit bzw. der Lage der zugehörigen Gegenstandspunkte entsprechende Koordinaten in mindestens zwei Dimensionen zugeordnet sind, die nicht beide senkrecht zur Blickrichtung des Sensors stehen. Die Bildpunkte können weiterhin Daten über weitere, insbesondere optische, Eigenschaften der Gegenstandspunkte, beispielsweise deren Reflektivität, enthalten. Diese Daten werden im folgenden als optische Eigenschaften der Bildpunkte bezeichnet.

Sensoren zur Erfassung solcher geschwindigkeits- oder tiefenaufgelöster Bilder sind grundsätzlich bekannt.

Hierbei kann es sich beispielsweise um Ultraschallsensoren handeln.

Vorzugsweise werden Sensoren für elektromagnetische Strahlung verwendet.

Hierbei kann es sich beispielsweise um Radarsensoren handeln. Vorzugsweise werden bei diesen Geschwindigkeiten der Gegenstandspunkte verfolgt.

Besonders bevorzugt kann es sich bei den Sensoren für elektromagnetische Strahlung um optoelektronische Sensoren handeln, die eine gute Ortsauflösung bieten und daher für das erfindungsgemäße Verfahren bevorzugt sind. So können beispielsweise Systeme mit Stereo-Videokameras verwendet werden, die eine Einrichtung zur Umsetzung der von den Kameras aufgenommenen Rohdaten in tiefenaufgelöste Bilder aufweisen.

Vorzugsweise werden jedoch Laserscanner verwendet, die bei einer Abtastung einen Sichtbereich mit mindestens einem gepulsten Strahlungsbündel abtasten, das einen vorgegebenen Winkelbereich überstreicht und von einem Punkt bzw. Bereich eines Gegenstands, meist diffus, reflektierte Strahlungspulse des Strahlungsbündels detektieren. Dabei wird zur Entfernungsmessung die Laufzeit der ausgesandten, reflektierten und detektierten Strahlungspulse erfaßt. Die so erfaßten Rohdaten für einen Bildpunkt können dann als Koordinaten den Winkel, bei dem der Reflex erfaßt wurde, und die aus der Laufzeit der Strahlungspulse bestimmte Entfernung des Gegenstandspunkts enthalten. Bei der Strahlung kann es sich insbesondere um sichtbares oder infrarotes Licht handeln.

Unter dynamischen Zustandsvariablen werden Variablen verstanden, die jeweils einen zeitlich veränderlichen Zustand des Objekts beschreiben, der wenigstens näherungsweise einem ebenso zeitlich veränderlichen Zustand des Gegenstands entspricht, der durch das Objekt dargestellt wird. Da eine Verfolgung von Objekten erfolgen soll, umfassen die dynamischen Zustandsvariablen insbesondere dynamische Zustandsvariablen zur Bestimmung der Position des jeweiligen Objekts. Bei den sensorspezifischen Zustandsvariablen kann es sich insbesondere um solche handeln, die dem Typ der von dem Sensor erfassten Meßdaten entsprechen. Bei Sensoren, die geschwindigkeitsaufgelöste Bilder erfassen, können insbesondere entsprechende, die Geschwindigkeit eines Gegenstands bzw. des dieses darstellenden Objekts beschreibende Zustandsvariablen, bei tiefenaufgelösten Bildern die Position eines Gegenstands bzw. des dieses darstellenden Objekts verwendet werden.

Die Erkennung und Verfolgung von Objekten erfolgt auf der Basis von Modellen, mit denen die zeitliche Entwicklung der dynamischen Zustandsvariablen wenigstens näherungsweise beschreibbar ist, wobei sich Art und Komplexität der Modelle unter anderem nach dem Objekterkennungs- und -verfolgungsverfahren sowie nach der Art der typischerweise auftretenden, zu verfolgenden Gegenstände richten können. Die Modelle können in bestimmte Typen eingeteilt werden und sind durch Modellparameter parametrisierbar. Die Anzahl und Art der Modellparameter ist dabei für den Modelltyp spezifisch, die Parametrisierung erfolgt durch Wahl entsprechender Werte des oder der Modellparameter. Insbesondere dienen die Modelle dazu, die Position eines Objekts vorherzusagen, in deren Nähe dann in einem folgenden geschwindigkeits- oder tiefenaufgelösten Bild nach dem Objekt gesucht werden kann.

Ein erfaßtes Bild wird dazu zunächst in Segmente aufgeteilt, die jeweils nur einen einzelnen Bildpunkt oder eine Menge aller Bildpunkte umfassen, von denen jeweils mindestens zwei entsprechend wenigstens einem Segmentierungskriterium als dem Segment zugehörig definiert werden, und die untereinander keine gemeinsamen Bildpunkte aufweisen. Bei diesem Segmentierungskriterium kann es sich insbesondere um ein Kriterium für einen maximal zulässigen Abstand und/oder einen maximal zulässigen Unterschied einer optischen Eigenschaft, insbesondere der Reflektivität, oder bei Verwendung geschwindigkeitsaufgelöster Bilder um ein Kriterium für eine maximal zulässige Differenz der Relativgeschwindigkeiten handeln. Weiterhin kann bei Verwendung eines Laserscanners auch eine aus Pulsbreiten und/oder -höhen bestimmte Neigung einer Fläche verwendet werden. Die Segmente weisen dabei keine gemeinsamen Bildpunkte auf, so daß eine wirkliche Aufteilung des Bildes erreicht wird. Durch diese Zusammenfassung zu Segmenten wird eine erste Reduktion der Datenmenge erreicht, die eine Weiterverarbeitung wesentlich erleichtert. Durch die Verwendung eines Abstandskriteriums kann berücksichtigt werden, daß Gegenstände für die meisten Anwendungen durch ihren räumlichen Zusammenhang definiert sind, so daß ein Segment nur einem Objekt zugeordnet sein sollte und nicht in zwei Objekten liegen und diese verbinden sollte. Bei dem Kriterium für den Abstand kann es sich um ein Schwellwert-Kriterium für ein euklidischen Abstand der Bildpunkte handeln, bei dem gegebenenfalls Koordinatenrichtungen unterschiedlich gewichtet sind. Es ist jedoch auch möglich, für jede Koordinatenrichtung ein eigenes Abstandskriterium zu verwenden.

Erfindungsgemäß sind zur Klassifizierung von Objekten mehrere Objektklassen vorgesehen, die wenigstens eine Eigenschaft von Objekten betreffen, die aus wenigstens einem der geschwindigkeits- oder tiefenaufgelösten Bilder bestimmbar ist. Eine Objektklasse zeichnet sich dabei dadurch aus, daß Objekte, denen diese Klasse zugeordnet ist, Gegenstände mit wenigstens einer bestimmten, für die Objektklasse spezifischen Eigenschaft darstellen. Insbesondere kann es sich um die gleiche Eigenschaft handeln, die aus den geschwindigkeits- oder tiefenaufgelösten Bildern bestimmbar ist. Grundsätzlich genügt eine Eigenschaft zur Spezifikation der Objektklasse, es können aber vorzugsweise auch Kombinationen von Eigenschaften verwendet werden, die eine eindeutige Zuordnung erlauben.

Die Eigenschaften sind dabei vorzugsweise so gewählt, daß sie für einen Gegenstand zumindest für den Beobachtungszeitraum konstant bleiben sollten. Im Rahmen dieser Anmeldung wird unter dem Begriff "konstante Eigenschaft" auch verstanden, daß Gegenstände der entsprechenden Objektklasse eine ganze Menge von Ausprägungen einer in einem durch die Gegenstände der Objektklasse vorgegebenen Rahmen veränderlichen Eigenschaft umfassen kann, wobei die Ausprägungen sich insbesondere in einem vorgegebenem Rahmen auseinander entwickeln können. Die Eigenschaft besteht dann also in der Menge der speziellen Ausprägungen der veränderlichen Eigenschaft, die ein Gegenstand der entsprechenden Objektklasse annehmen kann. Beispielsweise kann ein Sattelzug oder ein Gelenkbus in gestrecktem Zustand im wesentlichen die Form eines Rechtecks aufweisen, aus der sich bei Kurvenfahrt jedoch eine sich aus dem Rechteck ergebende abgewinkelte, immer noch objektklassenspezifische Form entwickeln kann. Unter der Form wird dann nicht nur die Form in gestrecktem Zustand, sondern die Menge der möglichen Formen verstanden.

In einem erfaßten Bild können einzelne aus dem Bild bestimmte Eigenschaften auch eines Objekts, das einen unveränderlichen Gegenstand darstellt, beispielsweise je nach Perspektive veränderlich sein.

Bei den Eigenschaften kann es sich um qualitative Eigenschaften, aber auch um durch wenigstens einen Parameter beschreibbare Eigenschaften des Objekts bzw. des durch das Objekt dargestellten Gegenstands handeln. Dabei kann die Eigenschaft insbesondere auch darin bestehen, daß die Werte des Parameters innerhalb eines vorgegebenen Intervalls liegen.

Eine für die Zuordnung einer Objektklasse zu einem Objekt verwendete, im folgenden als definierend bezeichnete Eigenschaft zeichnet sich dadurch aus, daß sie aus wenigstens einem erfaßten geschwindigkeits- oder tiefenaufgelösten Bild zumindest näherungsweise ermittelbar ist.

Die Verwendung von Objektklassen ist in der deutschen Patentanmeldung mit dem anwaltlichen Aktenzeichen S7880 = DE 101 48 071.7 und dem Titel "Verfahren zur Erkennung und Verfolgung von Objekten", die am gleichen Tag wie die vorliegende Anmeldung von derselben Anmelderin eingereicht wurde beschrieben.

Die Neubildung von Objekten erfolgt bei dem erfindungsgemäßen Verfahren anhand von Segmenten. Dabei wird aus einem Segment oder aus mehreren Segmenten unmittelbar ein Objekt einer geeigneten Objektklasse gebildet, was beispielsweise dadurch geschehen kann, daß aus dem Segment oder den Segmenten wenigstens eine Eigenschaft ermittelt wird, die mit der Eigenschaft, die eine Objektklasse definiert, in Beziehung gesetzt werden kann. Erfindungsgemäß erfolgt also eine frühe Klassifizierung, wodurch es möglich ist, auch aus mehreren zu demselben Gegenstand gehörigen Segmenten sofort nach Bildung der Segmente Objekte einer geeigneten Objektklasse zu bilden und nicht erst Objekte, denen keine weiteren Eigenschaften zugeordnet werden können. Damit kann insbesondere vermieden werden, daß aus einem Gegenstand hervorgehende, getrennte Segmente bei der Neubildung von Objekten zu mehreren getrennten Objekten führen, was bei der Objekterkennung und -verfolgung im weiteren Verlauf des Verfahrens entweder zu falschen Ergebnissen führen oder eine komplizierte Fusion von Objekten erfordern würde. Diese Vorteile würden sich bei einer erst zu einem späteren Zeitpunkt erfolgenden Klassifizierung von Objekten nicht ergeben.

Weiterbildungen und bevorzugte Ausführungsformen der Erfindung sind in der Beschreibung, den Ansprüchen und den Zeichnungen beschrieben.

Auch bei der Erkennung von bereits bestehenden Objekten in Bildern können Mehrdeutigkeiten in der Segment-Objekt-Zuordnung auftreten. Es ist daher bevorzugt, daß bei der Erkennung und Verfolgung von Objekten in einem Bild Segmente einem bereits vorhandenen Objekt unter Berücksichtigung von dessen Objektklasse zugeordnet werden. Dies kann ebenfalls durch Korrelation der Eigenschaften der zuzuordnenden Segmente und der Eigenschaften der Objektklasse erfolgen. Wenn ein Segment Objekten verschiedener Objektklassen zugeordnet werden kann, dann kann eine Mehrdeutigkeit ebenso aufgelöst werden wie in dem Fall, daß mehrere getrennte Segmente demselben Objekt zugeordnet werden können. In beiden Fällen kann eine Auflösung von Mehrdeutigkeiten zwanglos erfolgen.

Da Objekte ihre objektklassenspezifischen Eigenschaften nicht ändern sollten, ist es bevorzugt, daß eine Zuordnung von Bildpunkten bzw. Segmenten zu einem Objekt nur erfolgt, wenn diese mit den objektklassenspezifischen Eigenschaften des Objekt konsistent sind. Ist eine Eigenschaft dadurch gegeben, daß die Werte eines eine definierende Eigenschaft beschreibenden Parameters innerhalb eines Intervalls liegen, reicht es grundsätzlich aus, daß ein aus den Bildern bestimmter Parameter innerhalb des vorgegebenen Intervalls bleibt.

Die erfindungsgemäße frühe Klassifizierung, d. h. die Bildung von Objekten einer bestimmten Objektklasse direkt aus Segmenten, gestaltet sich insbesondere dann einfach, wenn gemäß einer bevorzugten Weiterbildung die Ausdehnung von Gegenständen, die durch Objekte der Objektklasse dargestellt werden, als eine die Objektklasse definierende Eigenschaft verwendet wird. Dazu ist es bevorzugt, daß die Objektklassen wenigstens durch die Ausdehnungen von Gegenständen definiert sind, die durch Objekte der Klasse dargestellt werden, daß wenigstens einem Objekt in Abhängigkeit von der Objektklasse, der es angehört, als statische Eigenschaft eine Objektbox zugeordnet wird, die eine Ausdehnung des Objekts in der Bildebene darstellt, eine bestimmte Form und Größe aufweist und hinsichtlich Form und Größe dem durch das Objekt dargestellten Gegenstand entspricht, und daß die dynamischen Zustandsvariablen zur Bestimmung der Position des Objekts die Koordinaten eines Bezugspunkts der Objektbox umfassen, über den die Position der Objektbox und damit des Objekts bestimmbar ist, und daß Segmente einem Objekt nur zugeordnet werden, wenn sie vollständig in der dem Objekt zugeordneten Objektbox liegen.

Die Objektboxen stellen demnach geometrische Gebilde in der Ebene des tiefenaufgelösten Bildes mit bestimmter Form und Größe dar, die die Ausdehnung der den zugehörigen Objekten entsprechenden Gegenstände wiedergeben. Die Objektbox beschreibt also im wesentlichen den zeitlich nicht variablen bzw. als zeitlich nicht variabel angenommenen Umriß des durch das Objekt dargestellten Gegenstands in der Ebene des tiefenaufgelösten Bildes. Die Entsprechung kann dabei nur sehr grob sein, insbesondere kann die Form der Objektbox eine sehr weitgehende Vereinfachung der Form des Gegenstands darstellen, beispielsweise eine einfache geometrische Grundform.

Da die Objektklassen wenigstens durch die Ausdehnungen von Gegenständen definiert sind, die durch Objekte der Objektklasse dargestellt werden, weisen Objekte einer gegebenen Objektklasse objektklassenspezifische Objektboxen auf, die die Ausdehnung von Gegenständen der Objektklasse wiedergeben. Damit ist es allein durch Analyse der Lage, Form und/oder Größe von Segmenten leicht möglich festzustellen, Objekten welcher Objektklasse diese Segmente zugeordnet werden können. Insbesondere kann leicht festgestellt werden, Objekte welcher Objektklasse neu aus gegebenen Segmenten gebildet werden können.

Die Verwendung von Objektboxen im allgemeinen und insbesondere im Zusammenhang mit Objektklassen ist in der deutschen Patentanmeldung mit dem anwaltlichen Aktenzeichen S7875 = DE 101 48 068.7 und dem Titel "Verfahren zur Erkennung und Verfolgung von Objekten", die am gleichen Tag wie die vorliegende Anmeldung von derselben Anmelderin eingereicht wurde beschrieben.

Gegenstände, denen eine Objektklasse entspricht, weisen jedoch in der Regel nicht alle genau die gleiche Form und/oder Ausdehnung auf, so daß die Vorgabe von Objektboxen mit fester Form und/oder Größe dazu führen kann, daß im weiteren Verlauf des Verfahrens zu kleine oder zu große Objektboxen für ein Objekt verwendet werden, was die Zuordnung von Segmenten zu dem Objekt erschwert. Es ist daher bevorzugt, daß Form und/oder Größe der Objektbox wenigstens durch mindestens einen statischen Zustandsparameter parametrisierbar ist, daß nach einer Zuordnung von Segmenten zu Objekten überprüft wird, ob die Ausdehnung des Gegenstands von der entsprechenden Ausdehnung der Objektbox abweicht, und daß bei Erkennung einer Abweichung der aus wenigstens einem Segment ermittelten Ausdehnung des Objekts von der Ausdehnung der Objektbox die Objektbox durch Änderung des Wertes des Zustandsparameters adaptiert wird. Durch die Anpassung der Größe der Objektbox an die tatsächliche Größe von entsprechenden Gegenständen kann die Auflösung von Mehrdeutigkeiten bei der Segment-Objekt-Zuordnung im Rahmen der Objekterkennung und -verfolgung noch weiter verbessert werden.

Grundsätzlich ist es möglich, daß selbst bei einer Neubildung von Objekten unter Verwendung der Objektklassen Mehrdeutigkeiten auftreten, die mit den in einem Bild vorhandenen Informationen nicht auflösbar sind. Bei Zuordnung nur eines Objekts einer bestimmten Objektklasse besteht die Gefahr, daß die Zuordnung nicht korrekt ist, was in späteren Stadien des Verfahrens zu Problemen führen könnte. Daher werden aus verfügbaren Segmenten hypothetische Objekte einer jeweils bestimmten Objektklasse gebildet, denen eine Wahrscheinlichkeit für die Existenz eines dem hypothetischen Objekt entsprechenden Gegenstands zugeordnet wird und für die in wenigstens einer folgenden Iteration des Verfahrens eine Erkennung und Verfolgung sowie eine Aktualisierung der Wahrscheinlichkeit durchgeführt wird. Damit können für verschiedene mögliche Segment-Objekt-Zuordnungen jeweils verschiedene hypothetische Objekte erstellt und weiterverfolgt werden, wobei jeweils die Wahrscheinlichkeiten aktualisiert werden. Auch zunächst unwahrscheinliche Hypothesen können dabei weiterverfolgt werden, um im weiteren Verlauf des Verfahrens gegebenenfalls das Zutreffen oder Nichtzutreffen der Hypothese anhand dann umfangreicherer Informationen prüfen zu können. Hypothetische Objekte, die nicht tatsächlich erfaßten Gegenständen entsprechen, werden im weiteren Verlauf des Verfahrens durch einen starken Abfall ihrer Wahrscheinlichkeiten, gegebenenfalls bis auf Null, erkennbar.

Die Verwendung von hypothetischen Objekten bei gattungsgemäßen Verfahren ist in der deutschen Patentanmeldung mit dem anwaltlichen Aktenzeichen S7873 = DE 101 48 063.7 und dem Titel "Verfahren zur Erkennung und Verfolgung von Objekten", die am gleichen Tag wie die vorliegende Anmeldung von derselben Anmelderin eingereicht beschrieben.

Um sicherzustellen, daß tatsächlich alle möglichen Kombinationen von Segmenten, die Objekten einer der Objektklassen entsprechen, bei der Bildung hypothetischer Objekte berücksichtigt werden, ist es bevorzugt, daß für Segmentteilmengen in der Menge aller verfügbaren Segmente jeweils mindestens eine Objekthypothese gebildet wird, die wenigstens ein hypothetisches Objekt umfaßt, und daß der Objekthypothese eine Hypothesenwahrscheinlichkeit zugewiesen wird, wobei die Hypothesenwahrscheinlichkeiten bei wenigstens einem folgenden Iterationsschritt aktualisiert werden und die Summe der Hypothesenwahrscheinlichkeiten der Objekthypothesen für eine Segmentteilmenge Eins ist. Dieses Vorgehen ermöglicht eine systematische Erstellung und Verfolgung der Objekthypothesen und insbesondere auch komplexerer Segmentkombinationen, bei denen aus mehreren Segmenten eine größere Anzahl von Objekthypothesen mit mehreren Objekten gleicher oder unterschiedlicher Objektklassen erzeugt werden. Dabei können insbesondere auch die Zuweisung von Hypothesenwahrscheinlichkeiten und deren Abhängigkeiten untereinander konsistent gehandhabt werden.

Desweiteren kann den einzelnen hypothetischen Objekten einer Objekthypothese jeweils als Wahrscheinlichkeit die Hypothesenwahrscheinlichkeit der Objekthypothese zugeordnet werden.

Bei einer anderen bevorzugten Weiterbildung ist es vorgesehen, daß für Segmentteilmengen in der Menge aller verfügbaren Segmente jeweils mindestens eine Objekthypothese gebildet wird, die genau ein hypothetisches Objekt umfaßt, und daß der Objekthypothese eine Hypothesenwahrscheinlichkeit zugewiesen wird, die bei wenigstens einem folgenden Iterationsschritt aktualisiert wird. Bei dieser Variante wird ein kleinere Zahl von hypothetischen Objekten erzeugt als bei der vorhergehenden Variante, was eine schnellere Durchführung des Verfahrens zur Folge hat.

Bei den beiden soeben geschilderten Weiterbildungen werden bevorzugt alle möglichen Objekthypothesen für jede der Segmentteilmengen gebildet.

Da die Anzahl der Objekthypothesen und damit der hypothetischen Objekte mit jeder Iteration des Verfahrens erheblich zunehmen kann, ist es weiterhin bevorzugt, daß für jede Segmentteilmenge in der Menge aller verfügbaren Segmente, die wenigstens einem vorgegebenen Hypothesenbildungskriterium entspricht, Objekthypothesen gebildet werden. Hierdurch kann die Anzahl der gebildeten Segmentteilmengen und damit der Objekthypothesen schnell und kontrolliert eingeschränkt werden. Bei dem Hypothesenbildungskriterium kann es sich insbesondere um ein Kriterium der Art handeln, daß eine Segmentteilmenge nur dann zur Bildung von Objekthypothesen verwendet wird, wenn jeweils zwei der darin enthaltenen Segmente höchstens einen vorgegebenen Maximalabstand voneinander aufweisen.

Weiterhin kann die Anzahl der Objekthypothesen und damit der hypothetischen weiterzuverfolgenden Objekte bevorzugt dadurch eingeschränkt werden, daß Objekthypothesen verworfen werden, wenn deren Hypothesenwahrscheinlichkeit eine untere Mindestwahrscheinlichkeit unterschreitet oder eines ihrer hypothetischen Objekte verworfen wird, und daß die hypothetischen Objekte einer Objekthypothese als eindeutig erkannte Objekte behandelt, die Objekthypothese gestrichen, wenn deren Wahrscheinlichkeit bzw. Hypothesenwahrscheinlichkeit eine obere Mindestwahrscheinlichkeit überschreitet. Ein hypothetisches Objekt kann dabei verworfen werden, wenn es beispielsweise ein Konsistenzkriterium nicht erfüllt. Dieses kann beispielsweise dadurch gegeben sein, daß für das hypothetische Objekt bei dessen Weiterverfolgung keine Segmente mehr gefunden werden. Hierdurch kann insbesondere auch die Bildung von als eindeutig erkannt behandelten Objekten erfolgen, die sich dadurch auszeichnen, daß für sie keine Verfolgung einer Wahrscheinlichkeit erfolgt. Werden aus einer Segmentteilmenge nach der ersten, weiter oben beschriebenen Weiterbildung Objekthypothesen mit möglicherweise mehreren hypothetischen Objekten und auf Eins normierten Wahrscheinlichkeiten gebildet, können bei Übergang zur Behandlung als eindeutig erkannte Objekte alle anderen Objekthypothesen, die aus der gleichen Segmentteilmenge gebildet wurden wie die überführte Objekthypothese, verworfen werden.

Da die Anzahl der Objekthypothesen und damit der hypothetischen Objekte mit jeder Iteration des Verfahrens auch bei Anwendung der oben geschilderten Maßnahmen noch deutlich zunehmen kann, ist es weiterhin bevorzugt, daß die verfügbaren Segmente, die grundsätzlich alle Segmente eines Bildes umfassen können, nur diejenigen Segmente eines Bildes sind, die keinen eindeutig erkannten oder als solche behandelten Objekten zugeordnet werden können. Dabei wird ausgenutzt, daß die Existenz eindeutig erkannter Objekte ein Ausschlußkriterium für die weitere Verwendung von diesen zugeordneten Segmenten für hypothetische Objekte ist.

Die Hypothesenwahrscheinlichkeiten werden unter Verwendung von eines Gütewerten für die entsprechenden hypothetischen Objekte ermittelt. Ein solcher Gütewert beschreibt, wie gut ein Objekt durch Bildpunkte wiedergegeben wird. Bei Verwendung von Objektboxen kann die Anzahl erfaßter, dem Objekt zugeordneter Bildpunkte in Verbindung mit einer Referenzanzahl, beispielsweise der in dieser Lage der Objektbox zu dem Sensor maximal erfaßbaren Anzahl von Bildpunkten, als Gütekriterium verwendet werden.

Weiterhin kann auch der mittlere Abstand von einem Objekt zugeordneten Bildpunkten zu dem Rand der entsprechenden Objektbox verwendet werden.

Vorzugsweise werden die Objektklassen, d. h. die sie definierende Eigenschaft bzw. die sie definierenden Eigenschaften, so gewählt, daß die Gegenstände, die diese objektklassenspezifischen definierenden Eigenschaften aufweisen, auch in bezug auf die Objekterkennung und -verfolgung derart ähnliche Eigenschaften aufweisen, daß sie mittels gleicher Modelltypen und gleicher Werte der Modellparameter beschreibbar sind. Es ist dann bevorzugt, daß jedem Objekt in Abhängigkeit von der zugeordneten Objektklasse ein Modelltyp und ein Wert für den entsprechenden Modellparameter zugeordnet werden. Das bedeutet, daß eine Objektklasse durch wenigstens eine definierende Eigenschaft von Objekten, über die die Zuordnung eines Objekts erfolgen kann, sowie einen Modelltyp und wenigstens einen Wert eines entsprechenden Modellparameters für den Modelltyp gekennzeichnet ist.

Durch die objektklassenabhängige Zuordnung eines Modelltyps und eines Werts für einen entsprechenden Modellparameter kann das bei dem erfindungsgemäßen Verfahren zur Erkennung und Verfolgung von Objekten verwendete Modell das Verhalten des Objekts und insbesondere dessen Bewegung besser beschreiben als dies bei konventionellen Verfahren der Fall ist, die strukturell gleiche Modelltypen und gleiche Werte für Modellparameter für alle bei dem Verfahren auftretenden Objekte verwenden. Die Verwendung klassenabhängiger Modelle ist insbesondere in der oben durch Bezugnahme in die vorliegende Anmeldung aufgenommene deutsche Patentanmeldung mit dem anwaltlichen Aktenzeichen S7880 beschrieben, auf die hier nochmals ausdrücklich Bezug genommen wird.

Besonders bevorzugt ist es, daß mindestens eine Objektklasse für Gegenstände vorgesehen ist, die sich in allen Richtungen in der Bildebene gleich bewegen können, und daß für Objekte, denen diese Objektklasse zugeordnet wurde, ein objektklassenabhängiger Modelltyp und/oder Modellparameter verwendet wird, nach dem mögliche Bewegungen des Objekts in allen Richtungen gleich behandelt werden, daß mindestens eine Objektklasse für Fahrzeuge vorgesehen ist, wobei für Objekte, denen eine der Objektklassen für Fahrzeuge zugeordnet ist, ein Modelltyp verwendet wird, bei dem dem Objekt eine Objektlängsachse zugeordnet wird, und wobei Bewegungen des Objekts in Richtung der Objektlängsachse und solche senkrecht zur Richtung der Objektlängsachse unterschiedlich in dem Modelltyp berücksichtigt werden. Bei den Modelltypen für Fahrzeuge können insbesondere kinematische Zwangsbedingungen berücksichtigt werden. Hierdurch können insbesondere bei der Definition eines Suchbereichs, in dem bei der Erkennung und Verfolgung nach Segmenten für ein entsprechendes Objekt gesucht wird, unterschiedlich geformte und insbesondere kleinere Suchbereiche erhalten werden, die sich deshalb weniger häufig überlappen und damit die Segment-Objekt-Zuordnung erleichtern.

Durch die Bildung von Objekten einer bestimmten Objektklasse, d. h. eine Klassifizierung zum frühestmöglichen Zeitpunkt, ergeben sich die genannten, durch objektklassenspezifische Modelltypen und/oder -parameter erhältlichen Vorteile insbesondere schon bei der ersten Iteration. Dies ist insbesondere dann von Bedeutung, wenn Objekthypothesen verfolgt werden, da hier der Verarbeitungsaufwand möglichst gering gehalten werden muß.

Weiterer Gegenstand der Erfindung ist ein Computerprogramm mit Programmcode-Mitteln, um das erfindungsgemäße Verfahren durchzuführen, wenn das Programm auf einem Computer ausgeführt wird.

Gegenstand der Erfindung ist auch ein Computerprogrammprodukt mit Programmcode-Mitteln, die auf einem computerlesbaren Datenträger gespeichert sind, um das erfindungsgemäße Verfahren durchzuführen, wenn das Computerprogrammprodukt auf einem Computer ausgeführt wird.

Unter einem Computer wird hierbei eine beliebige Datenverarbeitungsvorrichtung verstanden, mit der das Verfahren ausgeführt werden kann. Insbesondere können diese digitale Signalprozessoren und/oder Mikroprozessoren aufweisen, mit denen das Verfahren ganz oder in Teilen ausgeführt wird.

Weiterer Gegenstand der Erfindung ist ein Verfahren zur Erkennung und Verfolgung von Gegenständen in einem Sichtbereich eines Sensors, insbesondere eines Laserscanners, bei dem mit dem Sensor zeitlich aufeinanderfolgend geschwindigkeits- oder tiefenaufgelöste Bilder wenigstens eines Teils seines Sichtbereichs erfaßt werden, und bei dem die erfaßten Bilder mit dem erfindungsgemäßen Verfahren zur Erkennung und Verfolgung von Objekten verarbeitet werden.

Schließlich ist Gegenstand der Erfindung eine Vorrichtung zur Erkennung und Verfolgung von Objekten mit mindestens einem zur Erfassung geschwindigkeits- oder tiefenaufgelöster Bilder eines Überwachungsbereichs ausgebildeten Sensor , vorzugsweise einem optoelektronischer Sensor, insbesondere einem Laserscanner, und mit einer Datenverarbeitungseinrichtung, die zur Durchführung des erfindungsgemäßen Verfahrens ausgebildet ist.

Eine bevorzugte Ausführungsform der Erfindung wird im folgenden beispielhaft anhand der Zeichnungen erläutert. Es zeigen:
- Fig. 1: eine schematische Draufsicht auf ein Fahrzeug mit einem Laserscanner sowie einem Motorrad und einem Lastkraftwagen in einem Sichtbereich des Laserscanners, und
- Fig. 2: ein Ablaufdiagramm für ein Verfahren zur Erkennung und Verfolgung von Objekten nach einer bevorzugten Ausführungsform der Erfindung.

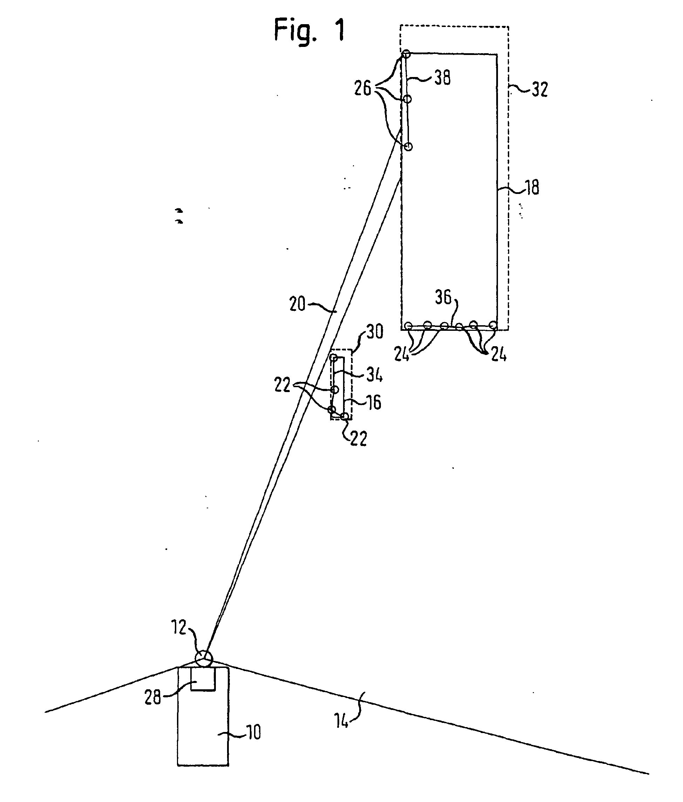

In Fig. 1 ist an der Frontseite eines Fahrzeugs 10 ein Laserscanner 12 angeordnet, dessen Sichtbereich 14 einen Teil des in Fahrtrichtung vor dem Fahrzeug 10 liegenden Bereichs umfaßt. Im Sichtbereich 14 befinden sich ein Motorrad 16 und ein Lastkraftwagen 18.

Der Laserscanner 12 tastet seinen Sichtbereich 14 mit einem umlaufenden, gepulsten Strahlungsbündel 20 ab und erfaßt die Position von Gegenstandspunkten 22, 24 und 26 auf dem Motorrad 16 und dem Lastkraftwagen 18, an denen ein Puls des Strahlungsbündels 20 reflektiert wurde, anhand des Winkels, bei dem der Strahlungspuls ausgesandt wurde, und des Abstands zum Laserscanner 12, der sich aus der Laufzeit des Strahlungspulses von der Abstrahlung bis zum Empfang nach der Reflexion ergibt. Bei einer Abtastung des Sichtbereichs 14 wird somit ein tiefenaufgelöstes Bild erfaßt, das die bei der Abtastung erfaßten Bildpunkte umfaßt, die zumindest die Koordinaten der Gegenstandspunkte 22, 24 und 26 enthalten, an denen das Strahlungsbündel 20 reflektiert wurde.

Im folgenden wird bei einer Bezugnahme auf die Figuren nicht mehr zwischen Bildpunkten und Gegenstandspunkten unterschieden. Die Aktualisierung der vollständigen Bilder erfolgt in einem zeitlichen Abstand T.

Die von dem Laserscanner 12 erfaßten Bilder werden an eine Datenverarbeitungseinrichtung 28 in dem Fahrzeug 10 ausgegeben, in der eine Weiterverarbeitung der Bilder stattfindet. Die Datenverarbeitungseinrichtung 28 weist dazu, in den Figuren nicht gezeigt, einen Prozessor und einen Speicher sowie eine Schnittstelle zur Übertragung der Daten von dem Laserscanner 12 auf. Weiterhin ist eine Schnittstelle zur Ausgabe von Daten an andere Datenverarbeitungseinrichtungen in dem Fahrzeug 10 vorgesehen, die jedoch ebenfalls in den Figuren nicht gezeigt sind.

Zur Erkennung und Verfolgung von Objekten wird ein Objekterkennungsund -verfolgungsverfahren nach einer bevorzugten Ausführungsform der Erfindung in der Datenverarbeitungseinrichtung 28 mittels eines darin gespeicherten erfindungsgemäßen Computerprogramms ausgeführt.

In diesem Beispiel sind zur Klassifizierung von Objekten Objektklassen vorgesehen, nämlich solche für Personen, Zweiräder, Personenkraftwagen, Lastkraftwagen und Busse, Leitpfosten, Pfähle und Bäume, Büsche sowie sonstige Gegenstände.

Im folgenden werden die Objektklassen für Personenkraftwagen, Zweiräder sowie Lastkraftwagen genauer beschrieben.

Objekte der Objektklasse Personenkraftwagen entsprechen Gegenständen, die in grober Näherung z. B. durch ein Rechteck mit einer Länge in einem Bereich zwischen 3 m und 5,5 m und einer Breite in einem Bereich zwischen 1,5 m und 2,5 m wiedergegeben werden können. Objekte der Objektklasse Zweirad stellen Gegenstände dar, die in grober Näherung z. B. ebenfalls durch ein Rechteck darstellbar sind, dessen Länge in einem Bereich zwischen 1,5 m und 2,5 m und dessen Breite in einem Bereich zwischen 0,5 m und 1 m liegt. Objekte der Objektklasse Lastkraftwagen schließlich stellen Gegenstände dar, die in grober Näherung z. B. durch ein Rechteck darstellbar sind, dessen Länge in einem Bereich zwischen 6 m und 20 m und dessen Breite in einem Bereich zwischen 2 m und 3 m liegt.

Jedem Objekt einer Objektklasse ist eine Objektbox zugeordnet, deren Form und Größe zumindest in grober Näherung der Form und Größe der Gegenstände entspricht, die durch Objekte der entsprechenden Objektklasse dargestellt werden.

In diesem Beispiel ist jedem Objekt einer der drei oben genauer beschriebenen Objektklassen eine rechteckige Objektbox zugeordnet, deren Ausdehnung den maximalen Ausdehnungen der die Objektklasse festlegenden Rechtecke entspricht, soweit nicht im Laufe des Verfahrens eine Adaption der Größe der Objektbox stattgefunden hat. Dem Motorrad 16 und dem Lastkraftwagen 18 sind daher die in Fig. 1 eng gepunktet gezeichneten Objektboxen 30 und 32 zugeordnet, die eine Länge von 2,5 m und eine Breite von 1 m bzw. einer Länge von 20 m und eine Breite von 3 m aufweisen.

Zur Objekterkennung und -verfolgung wird ein Kalman-Filter verwendet, wobei als Zustandsvariablen, die zeitlich veränderliche Eigenschaften der Objekte, insbesondere deren Position beschreiben, in diesem Ausführungsbeispiel die Schwerpunktskoordinaten der Objektbox eines Objekts und dessen Geschwindigkeit verwendet werden. Die Schwerpunktskoordinaten werden gleichzeitig auch als Meßgrößen bei der Kalman-Filterung verwendet. Bei einer anderen Ausführungsform könnte auch zusätzlich noch die Orientierung der Objektbox, beispielsweise dargestellt durch einen Winkel zwischen einer vorgegebenen Achse der Objektbox und einer raumfesten oder in bezug auf den Laserscanner 12 festen Achse, zur Zustandsvariable berücksichtigt werden.

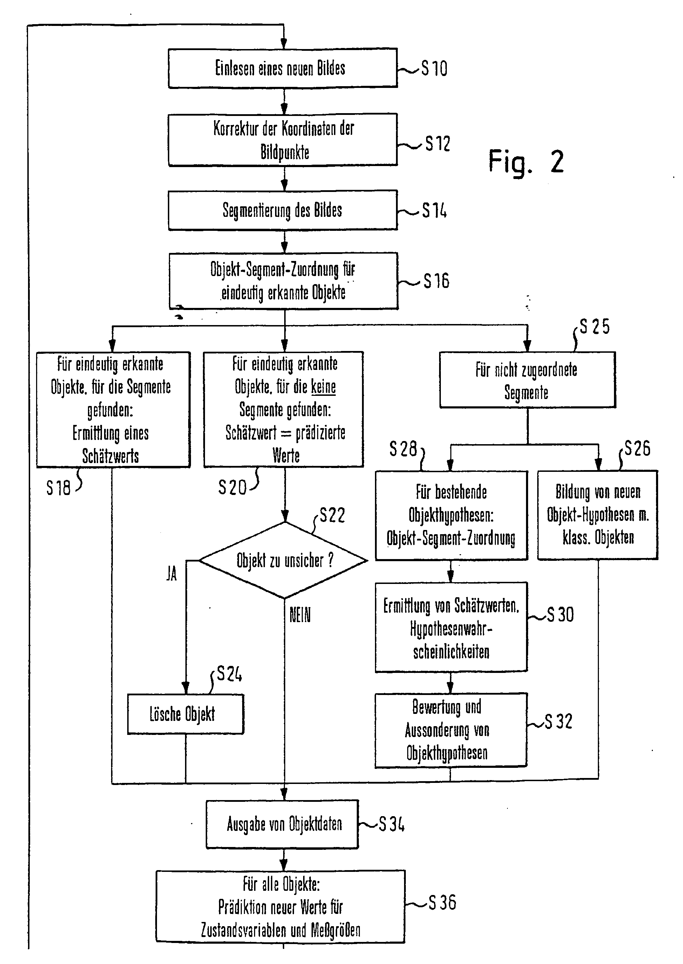

Das in dem Beispiel verwendete Verfahren nach der bevorzugten Ausführungsform der Erfindung wird nun anhand eines in Fig. 2 gezeigten, grob schematischen Ablaufdiagramms genauer beschrieben.

Nach der Erfassung eines Bildes durch den Laserscanner 12 wird in Schritt S10 zunächst ein neues Bild in die Datenverarbeitungseinrichtung 28 eingelesen.

In Schritt S12 wird dann eine Korrektur der Koordinaten der Bildpunkte durchgeführt.

Da der Laserscanner 12 Bildpunkte bei einer Abtastung des Sichtbereichs 14 nacheinander erfaßt, können zu Anfang einer Abtastung erfaßte Bildpunkte gegenüber Bildpunkten, die zum Ende der Abtastung erfaßt wurden, verschoben sein, wenn sich das Fahrzeug 10 und damit der an dem Fahrzeug 10 angebrachte Laserscanner 12 während der Abtastzeit relativ zu dem erfaßten Gegenstand deutlich bewegt hat.

Weiterhin können solche, durch die sequentielle Abtastung des Laserscanners 12 bedingten Verschiebungen dadurch entstehen, daß sich Objekte am linken, beispielsweise zuerst erfaßten Rand des Bildes bzw. Suchbereichs 14 und solche am rechten, dann zuletzt erfaßten Rand des Bildes mit hoher Geschwindigkeit, insbesondere quer zur Fahrtrichtung des Fahrzeugs 10, bewegen.

Solche Fehler in den Koordinaten der erfaßten Bildpunkte können bei einer sich anschließenden Segmentierung zur Bildung zu großer oder zu vieler Segmente führen, da die erfaßten Abstände der Bildpunkte zueinander nicht korrekt ist. Sie sollten daher korrigiert werden.

Daher wird zunächst ein Erfassungszeitpunkt für jeden Bildpunkt festgestellt, der sich auf einen gegebenen Bezugszeitpunkt während einer Abtastung bezieht. Weiterhin wird die Geschwindigkeit des Fahrzeugs 10 und damit des Laserscanners 12, beispielsweise durch an dem Fahrzeug angebrachte Sensoren für den Lenkwinkel und die Fahrzeuggeschwindigkeit, erfaßt.

Weiter wird für jeden Bildpunkt eine Geschwindigkeit ermittelt, die sich aus der Geschwindigkeit des Objekts ergibt, dem der jeweilige Bildpunkt zugeordnet ist. Diese kann beispielsweise durch eine einfach ausgestaltete, parallel zu dem erfindungsgemäßen Verfahren beispielsweise in dem Laserscanner 12 ablaufende Erkennung und Verfolgung von Objekten erhalten werden.

Für jeden Bildpunkt wird durch Multiplikation der Summe der Geschwindigkeit des Fahrzeugs 10 und der dem jeweiligen Bildpunkt zugeordneten Geschwindigkeit mit der Erfassungszeit eine Verschiebung erhalten, mit der die Fehler, die durch die sequentielle Abtastung entstehen, korrigiert werden.

Weiterhin werden Geistermessungen korrigiert, die dadurch entstehen, daß ein Gegenstand durch einen weiteren zwischen diesem und dem Laserscanner 12 liegenden Gegenstand teilweise verdeckt wird und das Strahlungsbündel 20 bei einer Abtastung eine Kante des dazwischenliegenden Gegenstands trifft und dabei Reflexe sowohl von dem dazwischenliegenden Gegenstand als auch dem teilweise verdeckten Gegenstand erfaßt werden. Dieser Effekt wird auch als das Auftreten von Abrißkanten bezeichnet. Da der Abstand eines Bildpunktes von dem Laserscanner 12 durch die Laufzeit der Strahlungspulse des Strahlungsbündels 20 ermittelt wird, kann es passieren, daß auf diese Weise "scheinbare" Bildpunkte, also Geistermessungen, zwischen den beiden Gegenständen erfaßt werden, zu denen keine Gegenstandspunkte existieren. Nach Erkennung einer solchen Situation durch Überwachung der Gradienten des Abstands der Bildpunkte von dem Laserscanner 12 in bezug auf den Abtastwinkel werden solche Geistermessungen entfernt und durch entsprechende Bildpunkte auf den Gegenständen ersetzt, deren Koordinaten beispielsweise durch Extrapolation aus den Positionen benachbarter Bildpunkte erhalten werden können.

In Schritt S14 wird dann eine Segmentierung des Bildes vorgenommenen, bei der jeweils einem neuen Segment ein noch nicht einem anderen Segment zugeordneter Bildpunkt zugeordnet wird und ausgehend von diesem Bildpunkt weitere Bildpunkte gesucht werden, die von schon vorhandenen Bildpunkten des Segments einen euklidischen Abstand aufweisen, der kleiner ist als ein vorgegebener, geeignet gewählter Maximalabstand. In Fig. 1 sind durch eine solche Segmentierung erhaltene Segmente 34 für das Motorrad 16 sowie Segmente 36 und 38 für den Lastkraftwagen 18 gezeigt. Die teilweise Verdeckung des Lastkraftwagens 18 durch das Motorrad 16 führt dazu, daß in dem Bild zwei getrennte Segmente 36 und 38 auftreten, die beide zu dem Lastkraftwagen 18 gehören.

Bei dem erfindungsgemäßen Verfahren sind zwei Typen von Objekten vorgesehen, nämlich eindeutig erkannte Objekte, die sicher einem Gegenstand in dem Sichtbereich 14 des Laserscanners 12 zugeordnet werden können, sowie hypothetische Objekte, für die nur eine Vermutung besteht, daß sie einen bestimmten Gegenstand in dem erfaßten Bild darstellen.

In Schritt S16 wird für jedes eindeutig erkannte Objekt eine Objekterkennung und -verfolgung durchgeführt. Dazu wird zunächst aufgrund prädizierter Werte für die Schwerpunktskoordinaten der Objekte beziehungsweise Objektboxen und entsprechender prädizierter Werte für die Kovarianzmatrizen der Meßgrößen, die in Schritt S30 der vorhergehenden Iteration ermittelt wurden, ein Suchbereich festgelegt, in dem nach den Objekten zuzuordnenden Segmenten gesucht wird.

Es erfolgt dann die Segment-Objekt-Zuordnung, bei der zur Erkennung eines gegebenen Objekts die entsprechende Objektbox in dem Suchbereich durch Translationen und gegebenenfalls Rotationen um den Schwerpunkt derart positioniert wird, daß in dem Suchbereich liegende Segmente in der Objektbox liegen. Durch die vorgegebene Ausdehnung der Objektbox können hierbei auch mehrere nicht zusammenhängende Segmente zwanglos einem Objekt zugeordnet werden, wenn diese durch eine geeignet positionierte Objektbox umschlossen werden können. Hierdurch wird die Segment-Objekt-Zuordnung wesentlich erleichtert.

Nach dieser Segment-Objekt-Zuordnung für eindeutig erkannte Objekte werden im wesentlichen drei Zweige des Verfahrens unabhängig voneinander durchlaufen.

Für eindeutig erkannte Objekte, für die bei der Segment-Objekt-Zuordnung in Schritt S16 wenigstens ein Segment gefunden wurde, werden in Schritt S18 aus den Koordinaten des Schwerpunktes der Objektboxen Werte für die Meßgrößen, d. h. insbesondere die Position der Objektbox und damit des Objekts, bestimmt.

Auf der Basis der ermittelten Werte für die Meßgrößen, d. h. insbesondere der Positionen der Objektboxen und damit der Objekte, sowie von Schätzwerten für die Zustandsvariablen aus einer vorhergehenden Iteration werden dann neue, aktuelle Schätzwerte für die Zustandsvariablen dieser Objekte ermittelt.

In einem zweiten Zweig des Verfahrens werden in der Vergangenheit eindeutig erkannte Objekte behandelt, für die in dem aktuellen Bild in Schritt S16 keine Segmente gefunden werden konnten. Dieser Fall kann eintreten, wenn ein Objekt beziehungsweise ein durch das Objekt dargestellter Gegenstand in einem Bild vollständig von einem anderen Gegenstand verdeckt wird. Es ist jedoch auch möglich, daß der Gegenstand tatsächlich unerwartet aus dem Sichtbereich 14 des Laserscanners 12 verschwunden ist. Schließlich ist auch denkbar, daß bei der Objekterkennung und -verfolgung ein Fehler aufgetreten ist, der zu einem Objektverlust geführt hat. Für diese Objekte werden in Schritt S20 als neue Schätzwerte für die Zustandsvariablen und die Varianzen und Kovarianzen der Zustandsvariablen die zuletzt prädizierten Werte verwendet.

In Schritt S22 wird dann anhand der Schätzwerte für die Varianzen und/oder Kovarianzen der Zustandsvariablen und der Wahrscheinlichkeitsverteilung für die Schätzwerte überprüft, ob das Objekt noch mit hinreichender Sicherheit zu lokalisieren sein wird. Dazu werden entsprechende Varianzen und/oder Kovarianzen mit einem vorgegebenen Schwellwert verglichen.

Erweist sich das Objekt als zu unsicher, da die entsprechenden Varianzen oder Kovarianzen den Schwellwert überschritten haben, wird es in Schritt S24 gelöscht. Anderenfalls wird das Objekt beibehalten und normal weiterverfolgt, d. h. auch bei der nächsten Iteration wird wieder geprüft, ob diesen Objekten Segmente zugeordnet werden können.

In einem dritten Zweig des Verfahrens werden bisher nicht zugeordnete Segmente bearbeitet, d. h. solche Segmente, die keinem aus der Vergangenheit eindeutig erkannten Objekt zugeordnet werden konnten.

Aus diesen Segmenten werden zum einen hypothetische Objekte gebildet, die im weiteren Verlauf des Verfahrens wie eindeutig erkannte Objekte verfolgt werden, wobei deren Wahrscheinlichkeiten jedoch in jedem Schritt aktualisiert werden, so daß hinreichend unwahrscheinlich gewordene hypothetische Objekte irgendwann gelöscht und hinreichend wahrscheinlich gewordene Objekte irgendwann in eindeutig erkannte Objekte umgewandelt werden können.

Zum anderen werden bereits bestehende hypothetische Objekte weiterverfolgt und gegebenenfalls gelöscht oder in eindeutig erkannte Objekte umgewandelt.

Zur Bildung neuer hypothetischer Objekte werden zunächst in Schritt S25 die bisher nicht zugeordneten Segmente festgestellt. Sie bilden die Menge der für eine Bildung und Verfolgung von Objekthypothesen verfügbaren Segmente.

In Schritt S26 werden für alle Segmentteilmengen der Menge der verfügbaren Segmente neue Objekthypothesen gebildet, wenn die Segmente einer Segmentteilmenge nicht weiter voneinander entfernt sind als die größte Ausdehnung eines Objekts in einer der gegebenen Objektklassen, d. h. im vorliegenden Beispiel 20 m. Hierdurch ergibt sich eine starke Reduktion der Anzahl der möglichen, zu betrachtenden Segmentteilmengen.

Um jede mögliche sinnvolle Zuordnung von Segmenten zu Objekten zu erfassen, werden für jede der Segmentteilmengen Objekthypothesen gebildet, die jeweils eine mögliche Kombination der Segmente der Segmentteilmenge zu Objekten umfassen. Bei der Kombination der Segmente zu Objekten werden Segmente und/oder Segmentkombinationen auf ihre Ausdehnung hin überprüft und mit den entsprechenden Definitionen der Objektklassen verglichen. Läßt sich ein Segment oder eine Segmentkombination durch eine objektklassenspezifische Objektbox, die geeignet positioniert wird, umfassen, wird aus diesem Segment oder der Segmentkombination ein entsprechendes Objekt der Objektklasse gebildet.

So kann beispielsweise aus den Segmenten 36 und 38 für den Lastkraftwagen 18 in Fig. 1 in einem Schritt ein Objekt der Objektklasse Lastkraftwagen gebildet werden, obwohl die Segmente relativ weit voneinander entfernt sind, da die Segmente 36 und 38 durch eine geeignet positionierte Objektbox 32 umfaßbar sind. Es wird also bei der Zuordnung die objektklassenspezifische Information benutzt, daß Gegenstände dieser Klasse bis zu 20 m lang und 3 m breit sein können, so daß die Objektbox 32 entsprechend gewählt ist.

Erfindungsgemäß erfolgt also eine frühe Klassifizierung, indem gezielt bereits auf Segmentbasis Segmente entsprechend vorgegebener Objektklassen zu Objekten einer der Objektklasse zusammengeführt werden. Es werden also weder alle Segmente einzeln verfolgt, noch werden alle tatsächlich möglichen Segmentkombinationen verfolgt. Vielmehr werden erfindungsgemäß nur solche Segmentkombinationen verfolgt, die einem Objekt in einer der vorgegebenen Objektklassen entsprechen können, wobei das Kriterium für die Zuordnung ist, daß die Segmente der Segmentkombination in objektklassenspezifische Objektbox passen.

Es werden dazu alle möglichen Kombinationen von Segmenten im Hinblick auf eine Zuordnung zu Objekten aller Objektklassen überprüft. Dadurch kann sichergestellt werden, daß in der Menge der Objekthypothesen tatsächlich eine Objekthypothese vorhanden ist, in der Objekte vorgesehen sind, die den erfaßten Gegenständen tatsächlich in Lage und Objektklasse entsprechen. Im Beispiel besteht eine Objekthypothese darin, daß die Segmente 34, 36 und 38 einem Objekt der Objektklasse "Zweirad" und einem Objekt der Objektklasse "Lastkraftwagen" entsprechen, denen jeweils die Objektboxen 30 und 32 zugeordnet sind. Eine andere Objekthypothese könnte darin bestehen, daß die Segmente 34 und 36 jeweils einem Objekt der Objektklasse Zweirad und das Segment 38 einem Objekt der Objektklasse Personenkraftwagen zugeordnet werden. Letztere würde jedoch in weiteren Verlauf des Verfahrenes verworfen, wenn das Motorrad 16 nicht mehr Teile des Lastkraftwagens 18 verdeckt und damit nur eine Segment für den Lastkraftwagen gefunden werden würde.

Mit der Bildung des Objekts der Objektklasse werden den Objekten entsprechende Objektboxen, im Beispiel in Fig. 1 die Objektboxen 32 und 34, sowie objektklassenspezifische Modelle mit entsprechenden Modelltypen und Modellparametern zugeordnet. Im Beispiel werden also den das Zweirad 16 und den Lastkraftwagen 18 darstellenden Objekten entsprechende Modelle zugewiesenen.

Parallel werden bereits bestehende Objekthypothesen in Schritt S28 weiterverfolgt. Dazu erfolgt eine Segment-Objekt-Zuordnung wie in Schritt S16, wobei jedoch nur die für die Verfolgung von Objekthypothesen verfügbaren Segmente zur Objekterkennung und -verfolgung herangezogen werden.

In Schritt S30 werden, wie für eindeutig erkannte Objekte in Schritt S18, Schätzwerte für die entsprechenden Zustandsvariablen sowie deren Varianzen und Kovarianzen ermittelt. Darüber hinaus werden neue Werte für die Hypothesenwahrscheinlichkeiten der einzelnen Objekthypothesen berechnet.

In Schritt S32 werden dann einerseits hypothetische Objekte von Objekthypothesen, deren Hypothesenwahrscheinlichkeit einen oberen Mindestwert, beispielsweise 95 Prozent überschreitet, in eindeutig erkannte Objekte umgewandelt, wobei die Objekthypothesen selbst so wie die anderen, aus der gleichen Segmentteilmenge gebildeten Objekthypothesen einschließlich ihrer hypothetischen Objekte gelöscht werden.

Weiterhin werden Objekthypothesen einschließlich ihrer hypothetischen Objekte gelöscht, deren Hypothesenwahrscheinlichkeit einen unteren Mindestwert, beispielsweise 5 Prozent, unterschreitet. Die Hypothesenwahrscheinlichkeiten der anderen Objekthypothesen, die aus der gleichen Segmentteilmenge gebildet wurden, werden dann dementsprechend aktualisiert.

In Schritt S34 werden dann für alle Objekte berechnete Objektdaten ausgegeben beziehungsweise gespeichert.

In Schritt S36 erfolgt dann eine Prädiktion neuer Werte für die Zustandsvariablen, Meßgrößen und die entsprechenden Varianzen und Kovarianzen aller bestehenden Objekte, d. h. aller eindeutig erkannten Objekte und aller vorhandenen hypothetischen Objekte.

Das Verfahren wird dann nach Erfassen eines neuen Bildes durch den Laserscanner 12 mit Schritt S10 fortgesetzt.

Bei einer anderen bevorzugten Ausführungsform der Erfindung läuft das Verfahren ganz analog zu dem oben geschilderten Verfahren ab, wobei jedoch die die Schritte S26, S30 und S32 modifiziert sind.

Im Unterschied zu dem oben geschilderten Verfahren werden bei dieser Ausführungsform Objekthypothesen gebildet, die genau ein hypothetisches Objekt enthalten.

Die Bildung dieser Objekthypothesen in Schritt S26 kann dabei analog zur der Bildung der hypothetischen Objekte bei dem oben geschilderten Ausführungsbeispiel erfolgen, wobei jedoch jede Objekthypothese und damit jedes hypothetische Objekt einzeln eine aus einem Gütewert der entsprechenden Messung bestimmte Hypothesenwahrscheinlichkeit erhält, die unabhängig von den Hypothesenwahrscheinlichkeiten anderer Hypothesen ist. Der Gütewert wird unter Verwendung der Anzahl der in der entsprechenden Objektbox liegenden Bildpunkte und der in der gegebenen Lage der Objektbox maximal möglichen Anzahl von Bildpunkten bestimmt.

Die Aktualisierung der Hypothesenwahrscheinlichkeiten und die Bewertung der Objekthypothesen in den Schritten S30 und S32 ist dahingehend verändert, daß jede Objekthypothese unabhängig von den anderen einzeln bewertet wird.

### Bezugszeichenliste

- 10: Fahrzeug
- 12: Laserscanner
- 14: Sichtbereich
- 16: Motorrad
- 18: Lastkraftwagen
- 20: Strahlungsbündel
- 22: Gegenstands- bzw. Bildpunkte
- 24: Gegenstands- bzw. Bildpunkte
- 26: Gegenstands- bzw. Bildpunkte
- 28: Datenverarbeitungseinrichtung
- 30: Objektbox
- 32: Objektbox
- 34: Segment
- 36: Segment
- 38: Segment

## Patentansprüche

1. Verfahren zur Erkennung und Verfolgung von Objekten auf der Basis von von einem Sensor, insbesondere einem Laserscanner (12), erfaßten, geschwindigkeits- oder tiefenaufgelösten, Bildpunkte (22, 24, 26) enthaltenden Bildern von Gegenständen (16, 18) in einem Sichtbereich (14) des Sensors (12),
- bei dem die Erkennung und Verfolgung unter Verwendung eines jeweils einem der Objekte zugeordneten Modells für die zeitliche Entwicklung von dynamischen Zustandsparametern erfolgt, die wenigstens eine sensorspezifische Eigenschaft des Objekts beschreiben, wobei das Modell einen Modelltyp hat und durch wenigstens einen Modellparameter parametrisierbar ist,
- bei dem aus den Bildpunkten (22, 24, 26) des aktuellen Bildes Segmente (34, 36, 38) gebildet werden, die jeweils einen einzelnen Bildpunkt (22, 24, 26) oder eine Menge aller Bildpunkte (22, 24, 26) umfassen, von denen jeweils mindestens zwei entsprechend wenigstens einem Segmentierungskriterium als dem Segment (34, 36, 38) zugehörig definiert werden, und die untereinander keine gemeinsamen Bildpunkte (22, 24, 26) aufweisen,
- bei dem zur Neubildung von Objekten jeweils aus wenigstens einem Segment (34, 36, 38) ein neues Objekt gebildet wird,
- bei dem bei der Erkennung und Verfolgung von Objekten in einem Bild Segmente (34, 36, 38) bereits vorhandenen Objekten zugeordnet werden,
- bei dem zur Klassifizierung von Objekten mehrere Objektklassen vorgesehen werden, die wenigstens eine Eigenschaft von Objekten betreffen, die aus wenigstens einem der geschwindigkeits- oder tiefenaufgelösten Bilder bestimmbar ist,
- bei dem zur Neubildung eines Objekts Segmente (34, 36, 38) nur solchen neuen Objekten zugeordnet werden, die einer der vorgegebenen Objektklassen angehören, und
- bei dem aus verfügbaren Segmenten (34, 36, 38) hypothetische Objekte einer jeweils bestimmten Objektklasse gebildet werden, denen eine Wahrscheinlichkeit für die Existenz eines dem hypothetischen Objekt entsprechenden Gegenstands zugeordnet wird und für die in wenigstens einer folgenden Iteration des Verfahrens eine Erkennung und Verfolgung sowie eine Aktualisierung der Wahrscheinlichkeit durchgeführt wird,
**dadurch gekennzeichnet,**
**dass** die Hypothesenwahrscheinlichkeiten unter Verwendung von Gütewerten für die entsprechenden hypothetischen Objekte ermittelt werden, wobei Objektboxen verwendet werden, die eine Ausdehnung der Objekte in der Bildebene darstellen, eine bestimmte Form und Größe aufweisen und hinsichtlich Form und Größe dem durch das Objekt dargestellten Gegenstand entsprechen, und wobei die Anzahl erfasster, dem Objekt zugeordneter Bildpunkte in Verbindung mit einer Referenzanzahl und/oder der mittlere Abstand von einem Objekt zugeordneten Bildpunkten zu dem Rand der entsprechenden Objektbox als Gütekriterium verwendet wird.

2. Verfahren nach Anspruch 1,
**dadurch gekennzeichnet,**
**daß** bei der Erkennung und Verfolgung von Objekten in einem Bild Segmente (34, 36, 38) einem bereits vorhandenen Objekt unter Berücksichtigung von dessen Objektklasse zugeordnet werden.

3. Verfahren nach Anspruch 1 oder 2,
**dadurch gekennzeichnet,**
**daß** die Objektklassen wenigstens durch die Ausdehnungen von Gegenständen definiert sind, die durch Objekte der Klasse dargestellt werden,
**daß** wenigstens einem Objekt in Abhängigkeit von der Objektklasse, der es angehört, als statische Eigenschaft eine Objektbox (30, 32) zugeordnet wird, die eine Ausdehnung des Objekts in der Bildebene darstellt, eine bestimmte Form und Größe aufweist und hinsichtlich Form und Größe dem durch das Objekt dargestellten Gegenstand entspricht,
**daß** die dynamischen Zustandsvariablen zur Bestimmung der Position des Objekts die Koordinaten eines Bezugspunkts der Objektbox (30, 32) umfassen, über den die Position der Objektbox (30, 32) und damit des Objekts bestimmbar ist, und
**daß** Segmente (34, 36, 38) einem Objekt nur zugeordnet werden, wenn sie vollständig in der dem Objekt zugeordneten Objektbox (30, 32) liegen.

4. Verfahren nach Anspruch 3,
**dadurch gekennzeichnet,**
**daß** Form und/oder Größe der Objektbox (30, 32) wenigstens durch mindestens einen statischen Zustandsparameter parametrisierbar sind,
**daß** nach einer Zuordnung von Segmenten (34, 36, 38) zu Objekten überprüft wird, ob die Ausdehnung des Gegenstands von der entsprechenden Ausdehnung der Objektbox (30, 32) abweicht, und daß bei Erkennung einer Abweichung der aus wenigstens einem Segment (34, 36, 38) ermittelten Ausdehnung des Objekts von der Ausdehnung der Objektbox (30, 32) die Objektbox (30, 32) durch Änderung des Wertes des Zustandsparameters adaptiert wird.

5. Verfahren nach einem der vorhergehenden Ansprüche,
**dadurch gekennzeichnet,**
**daß** für Segmentteilmengen in der Menge aller verfügbaren Segmente (34, 36, 38) jeweils mindestens eine Objekthypothese gebildet wird, die wenigstens ein hypothetisches Objekt umfaßt, und
**daß** der Objekthypothese eine Hypothesenwahrscheinlichkeit zugewiesen wird, wobei die Hypothesenwahrscheinlichkeiten bei wenigstens einem folgenden Iterationsschritt aktualisiert werden und die Summe der Hypothesenwahrscheinlichkeiten der Objekthypothesen für eine Segmentteilmenge Eins ist.

6. Verfahren nach einem der vorhergehenden Ansprüche,
**dadurch gekennzeichnet,**
**daß** für Segmentteilmengen in der Menge aller verfügbaren Segmente (46 bis 68, 102) jeweils mindestens eine Objekthypothese gebildet wird, die genau ein hypothetisches Objekt umfaßt, und
**daß** der Objekthypothese eine Hypothesenwahrscheinlichkeit zugewiesen wird, die bei wenigstens einem folgenden Iterationsschritt aktualisiert wird.

7. Verfahren nach Anspruch 5 oder 6,
**dadurch gekennzeichnet,**
**daß** Objekthypothesen verworfen werden, wenn deren Hypothesenwahrscheinlichkeit eine untere Mindestwahrscheinlichkeit unterschreitet oder eines ihrer hypothetischen Objekte verworfen wird, und
**daß** die hypothetischen Objekte einer Objekthypothese als eindeutig erkannte Objekte behandelt, die Objekthypothese gestrichen, wenn deren Wahrscheinlichkeit eine obere Mindestwahrscheinlichkeit überschreitet.

8. Verfahren nach einem der vorhergehenden Ansprüche,
**dadurch gekennzeichnet,**
**daß** jedem Objekt in Abhängigkeit von der zugeordneten Objektklasse ein Modelltyp und ein Wert für den entsprechenden Modellparameter zugeordnet werden.

9. Verfahren nach Anspruch 8,
**dadurch gekennzeichnet,**
**daß** mindestens eine Objektklasse für Gegenstände vorgesehen ist, die sich in allen Richtungen in der Bildebene gleich bewegen können, und daß für Objekte, denen diese Objektklasse zugeordnet wurde, ein objektklassenabhängiger Modelltyp und/oder Modellparameter verwendet wird, nach dem mögliche Bewegungen des Objekts in allen Richtungen gleich behandelt werden, und
**daß** mindestens eine Objektklasse für Fahrzeuge vorgesehen ist, daß für Objekte, denen eine der Objektklassen für Fahrzeuge zugeordnet ist, ein Modelltyp verwendet wird, bei dem dem Objekt eine Objektlängsachse zugeordnet wird, und
**daß** Bewegungen des Objekts in Richtung der Objektlängsachse und solche senkrecht zur Richtung der Objektlängsachse unterschiedlich in dem Modelltyp berücksichtigt werden.

10. Computerprogramm mit Programmcode-Mitteln, um das Verfahren nach einem der Ansprüche 1 bis 9 durchzuführen, wenn das Programm auf einem Computer ausgeführt wird.

11. Computerprogrammprodukt mit Programmcode-Mitteln, die auf einem computerlesbaren Datenträger gespeichert sind, um das Verfahren nach einem der Ansprüche 1 bis 9 durchzuführen, wenn das Computerprogrammprodukt auf einem Computer ausgeführt wird.

12. Vorrichtung zur Erkennung und Verfolgung von Objekten mit mindestens einem zur Erfassung geschwindigkeits- oder tiefenaufgelöster, Bildpunkte (22, 24, 26) enthaltender Bilder eines Überwachungsbereichs (14) ausgebildeten Sensor, insbesondere einem Laserscanner (12), und mit einer Datenverarbeitungseinrichtung (28), wobei die Erkennung und Verfolgung unter Verwendung eines jeweils einem der Objekte zugeordneten Modells für die zeitliche Entwicklung von dynamischen Zustandsparametern erfolgt, die wenigstens eine sensorspezifische Eigenschaft des Objekts beschreiben, wobei das Modell einen Modelltyp hat und durch wenigstens einen Modellparameter parametrisierbar ist, und wobei die Datenverarbeitungseinrichtung (28) umfasst:
- Mittel zur Bildung von Segmenten (34, 36, 38) aus den Bildpunkten (22, 24, 26) des aktuellen Bildes, wobei die Segmente (34, 36, 38) jeweils einen einzelnen Bildpunkt (22, 24, 26) oder eine Menge aller Bildpunkte (22, 24, 26) umfassen, von denen jeweils mindestens zwei entsprechend wenigstens einem Segmentierungskriterium als dem Segment (34, 36, 38) zugehörig definiert werden, und die untereinander keine gemeinsamen Bildpunkte (22, 24, 26) aufweisen,
- Mittel zur Bildung eines neuen Objektes aus jeweils wenigstens einem Segment (34, 36, 38) zur Neubildung von Objekten,
- Mittel zur Zuordnung von Segmenten (34, 36, 38) zu bereits vorhandenen Objekten in einem Bild bei der Erkennung und Verfolgung von Objekten,
- Mittel zur Klassifizierung von Objekten anhand mehrerer Objektklassen, die wenigstens eine Eigenschaft von Objekten betreffen, die aus wenigstens einem der geschwindigkeits- oder tiefenaufgelösten Bilder bestimmbar ist,
- Mittel zur Zuordnung von Segmenten (34, 36, 38) zu nur solchen Objekten, die einer der vorgegebenen Objektklassen angehören, zur Neubildung eines Objekts, und
- Mittel zur Bildung von hypothetischen Objekten einer jeweils bestimmten Objektklasse aus verfügbaren Segmenten (34, 36, 38), wobei den Objekten eine Wahrscheinlichkeit für die Existenz eines dem hypothetischen Objekt entsprechenden Gegenstands zugeordnet wird und für die in wenigstens einer folgenden Iteration des Verfahrens eine Erkennung und Verfolgung sowie eine Aktualisierung der Wahrscheinlichkeit durchgeführt wird,
**dadurch gekennzeichnet,**
**dass** Mittel zur Ermittlung der Hypothesenwahrscheinlichkeiten unter Verwendung von Gütewerten für die entsprechenden hypothetischen Objekte vorgesehen sind, wobei Objektboxen verwendet werden, die eine Ausdehnung der Objekte in der Bildebene darstellen, eine bestimmte Form und Größe aufweisen und hinsichtlich Form und Größe dem durch das Objekt dargestellten Gegenstand entsprechen, und wobei die Anzahl erfasster, dem Objekt zugeordneter Bildpunkte in Verbindung mit einer Referenzanzahl und/oder der mittlere Abstand von einem Objekt zugeordneten Bildpunkten zu dem Rand der entsprechenden Objektbox als Gütekriterium verwendet wird.

## Claims

1. A method for the detection and tracking of objects based on images of real objects (16, 18) in a range of view (14) of a sensor (12) detected by the sensor, in particular a laser scanner (12), and including speed-resolved or depth-resolved picture elements (22, 24, 26),
- wherein the recognition and detection takes place using a model respectively associated with one of the objects for the chronological development of dynamic state parameters which describe at least one sensor-specific property of the object, wherein the model has a model type and can be parameterized by at least one model parameter;
- wherein segments (34, 36, 38) are formed from the picture elements (22, 24, 26) of the current image and each include an individual picture element (22, 24, 26) or a set of all picture elements (22, 24, 26), of which at least a respective two are defined according to at least one segmentation criterion as belonging to the segment (34, 36, 38) and which do not have any common picture elements (22, 24, 26) among one another;
- wherein a new object is formed for the new formation of objects from a respective at least one segment (34, 36, 38);
- wherein segments (34, 36, 38) are associated with already present objects on the recognition and tracking of objects in an image;
- wherein a plurality of object classes are provided for the classification of objects which relate to at least one property of objects which can be determined from at least one of the speed-resolved or depth-resolved images;
- wherein segments (34, 36, 38) are only associated with such new objects which belong to one of the preset object classes for the new formation of an object; and
wherein hypothetical objects of a respectively determined object class are formed from available segments (34, 36, 38), with which hypothetical objects a probability for the existence of a real object corresponding to the hypothetical object is associated and for which a recognition and tracking as well as an updating of the probability is carried out in at least one following iteration of the method,
**characterised in that**
the hypothesis probabilities are determined using quality values for the corresponding hypothetical objects, with object boxes being used which represent an extent of the object in the image plane, have a specific shape and size and correspond with respect to shape and size to the real object represented by the object, and with the number of detected picture elements associated with the object in conjunction with a reference number and/or with the mean spacing of picture elements associated with an object from the edge of the corresponding object box being used as the quality criterion.

2. A method in accordance with claim 1,
**characterised in that**
segments (34, 36, 38) are associated with an already present object while taking account of its object class on the recognition and tracking of objects in an image.

3. A method in accordance with claim 1 or claim 2,
**characterised in that**
the object classes are defined at least by the extents of real objects which are represented by objects of the class;
**in that** an object box (30, 32) as a static property is associated with a least one object in dependence on the object class to which it belongs, said object box representing an extent of the object in the image plane, having a specific shape and size and corresponding to the real object represented by the object with respect to shape and size;
**in that** the dynamic state variables for the determination of the position of the object include the coordinates of a reference point of the object box (30, 32) via which the position of the object box (30, 32,), and thus of the object, can be determined; and
**in that** segments (34, 36, 38) are only associated with an object when they are completely disposed in the object box (30, 32) associated with the object.

4. A method in accordance with claim 3,
**characterised in that**
the shape and/or size of the object box (30, 32 can be parameterised at least by at least one static state parameter;
**in that**, after an association of segments (34, 36, 38) to objects, a check is made whether the extent of the real object differs from the corresponding extent of the object box (30, 32); and
**in that**, on the recognition of a deviation of the extent of the object determined from at least one segment (34, 36, 38) from the extent of the object box (30, 32), the object box (30, 32) is adapted by changing the value of the state parameter.

5. A method in accordance with any one of the preceding claims,
**characterised in that**
in each case at least one object hypothesis which includes at least one hypothetical object is formed for part segment sets in the set of all available segments (34, 36, 38); and
**in that** a hypothesis probability is assigned to the object hypothesis, with the hypothesis probabilities being updated on at least one following iteration step and the sum of the hypothesis probabilities of the object hypothesis being one for a part segment set.

6. A method in accordance with any one of the preceding claims,
**characterised in that**
in each case at least one object hypothesis which includes precisely one hypothetical object is formed for part segment sets in the set of all available segments (46 to 68); and
**in that** a hypothesis probability is assigned to the object hypothesis and is updated on at least one following iteration step.

7. A method in accordance with claim 5 or claim 6,
**characterised in that**
object hypotheses are rejected when their hypothesis probability falls below a lower minimum probability or one of their hypothetical objects is rejected; and
**in that** the hypothetical objects of an object hypothesis are treated as unambiguously recognized objects and the object hypothesis is cancelled when its probability exceeds an upper minimum probability.

8. A method in accordance with any one of the preceding claims,
**characterised in that**
a model type and a value for the corresponding model parameter are associated with each object in dependence on the associated object class.

9. A method in accordance with claim 8,
**characterised in that**
at least one object class is provided for real objects which can move the same in all directions in the image plane; and **in that**, for objects with which this object class was associated, a model type and/or model parameter dependent on an object class is used according to which possible movements of the object in all directions are treated the same; and
**in that** at least one object class is provided for vehicles, **in that** a model type in which a longitudinal object axis is associated with the object for objects with which one of the object classes for vehicles is associated; and
**in that** movements of the object in the direction of the longitudinal axis of the object and those perpendicular to the direction of the longitudinal axis of the object are taken into account differently in the model type.

10. A computer program with program code means to carry out the method in accordance with any one of the claims 1 to 9, when the program is carried out on a computer.

11. A computer program product with program code means which are stored on a computer readable data carrier to carry out the method in accordance with any one of claims 1 to 9, when the computer program product is carried out on a computer.

12. An apparatus for the recognition and tracking of objects having at least one sensor, in particular a laser scanner (12), made for the detection of speed-resolved or depth-resolved images of a monitored zone (14) containing picture elements (22, 24, 26), and having a data processing device (28), wherein the recognition and tracking takes place using a model associated with a respective one of the objects for the chronological development of dynamic state parameters which describe at least one sensor-specific property of the object, wherein the model has a model type and is parameterisable by at least one model parameter, and wherein the data processing device (28) comprises:
- means for the formation of segments (34, 36, 38) from the picture elements (22, 24, 26) of the current image, wherein the segments (34, 36, 38) each include an individual picture element (22, 24, 26) or a set of all picture elements (22, 24, 26), of which at least a respective two are defined according to at least one segmentation criterion as belonging to the segment (34, 36, 38) and which do not have any common picture elements (22, 24, 26) among one another;
- means for the formation of a new object from at least one respective segment (34, 36, 38) for the new formation of objects;
- means for the association of segments (34, 36, 38) with already present objects in an image on the recognition and tracking of objects;
- means for the classification of objects with reference to a plurality of object classes which relate to at least one property of objects which can be determined from at least one of the speed-resolved or depth-resolved images;
- means for the association of segments (34, 36, 38) only with such objects which belong to one of the preset object classes for the new formation of an object and
- means for the formation of hypothetical objects of a respective determined object class from available segments (34, 36, 38), wherein a probability of the existence of a real object corresponding to the hypothetical object is associated with the objects and for which a recognition and tracking as well as an updating of the probability is carried out in at least one following iteration of the method,
**characterised in that**
means are provided for the determination of the hypothesis probabilities using quality values for the corresponding hypothetical objects, with object boxes being used which represent an extent of the objects in the image plane, have a specific shape and size and correspond with respect to shape and size to the real object represented by the object, and with the number of detected picture elements associated with the object in conjunction with a reference number and/or with the mean spacing of picture elements associated with an object from the edge of the corresponding object box being used as the quality criterion.

## Revendications

1. Procédé pour reconnaître et pour poursuivre des objets en se basant sur des images d'articles (16, 18) détectées par un capteur, en particulier par un scanneur laser (12), à résolution de vitesse ou de profondeur, contenant des pixels (22, 24, 26), dans une zone de vision (14) du capteur (12),
- dans lequel la reconnaissance et la poursuite s'effectuent en utilisant un modèle respectif associé à l'un des objets pour l'évolution temporelle de paramètres d'état dynamiques qui décrivent au moins une caractéristique de l'objet spécifique au capteur, le modèle ayant un type de modèle et pouvant être paramétré par au moins un paramètre de modèle,
- dans lequel des segments (34, 36, 38) sont formés à partir des pixels (22, 24, 26) de l'image actuelle, qui comprennent chacun un pixel individuel (22, 24, 26) ou une certaine quantité de pixels (22, 24, 26) dont deux au moins sont définis comme appartenant au segment (34, 36, 38) en correspondance d'un critère de segmentation, et qui ne présentent pas de pixels (22, 24, 26) communs entre eux,
- dans lequel, en vue de reformer des objets, un nouveau objet est formé à partir d'au moins un segment (34, 36, 38),
- dans lequel, lors de la reconnaissance et de la poursuite d'objets, dans une image, des segments (34, 36, 38) sont associés à des objets déjà existants,
- dans lequel, pour classifier des objets, on prévoit plusieurs classes d'objets qui concernent au moins une propriété d'objet susceptible d'être déterminée à partir de l'une au moins des images à résolution de vitesse ou de profondeur,
- dans lequel, pour reformer un objet, des segments (34, 36, 38) sont associés uniquement à de tels objets nouveaux qui appartiennent à l'une des classes d'objet prédéterminées,
- dans lequel, à partir des segments disponibles (34, 36, 38), on forme des objets hypothétiques d'une classe d'objets respective déterminée, auxquels on associe une probabilité pour l'existence d'un article correspondant à l'objet hypothétique et pour lesquels, dans au moins une itération successive du procédé, on procède à une reconnaissance et à une poursuite ainsi qu'à une actualisation de la probabilité,
**caractérisé en ce que**
l'on détermine les probabilités d'hypothèse en utilisant des valeurs de qualité pour les objets hypothétiques correspondants, en appliquant des boîtes d'objets qui représentent une extension des objets dans le plan de l'image, qui présentent une certaine forme et une certaine taille et qui, quant à la forme et à la taille, correspondent à l'article représenté par l'objet, et on utilise à titre de critère de qualité le nombre de pixels détectés associés à l'objet, en association avec un nombre de référence et/ou la distance moyenne entre les pixels associés à un objet et le bord de la boîte d'objets correspondante.

2. Procédé selon la revendication 1,
**caractérisé en ce que**
lors de la reconnaissance et de la poursuite d'objets, dans une image, des segments (34, 36, 38) sont associés à un objet déjà existant en prenant en compte sa classe d'objets.

3. Procédé selon la revendication 1 ou 2,
**caractérisé en ce que**
les classes d'objets sont définies au moins par les extensions d'articles qui sont représentés par des objets de ladite classe,
**en ce que** l'on associe à au moins un objet, en fonction de la classe d'objets à laquelle il appartient, une boîte d'objets (30, 32) à titre de propriété statique, boîte qui représente une extension de l'objet dans le plan de l'image, qui présente une certaine forme et une certaine taille et qui correspond à l'article représenté par l'objet quant à la forme et à la taille,
**en ce que** les variables d'état dynamiques pour déterminer la position de l'objet comprennent les coordonnées d'un point de référence de la boîte d'objets (30, 32) via lequel on peut déterminer la position de la boîte d'objets (30, 32) et ainsi de l'objet, et
**en ce que** les segments (34, 36, 38) sont associés à un objet uniquement lorsqu'ils se trouvent complètement dans la boîte d'objets (30, 32) associés à l'objet.

4. Procédé selon la revendication 3,
**caractérisé en ce que**
la forme et/ou la taille de la boîte d'objets (30, 32) sont susceptibles d'être paramétrées par au moins un paramètre d'état statique,
**en ce qu'**après une association de segments (34, 36, 38) à des objets, on vérifie si l'extension de l'article s'écarte de l'extension correspondante de la boîte d'objets (30, 32), et **en ce que** lors de la reconnaissance d'un écart de l'extension de l'objet détectée à partir d'au moins un segment (34, 36, 38) par rapport à l'extension de la boîte d'objets (30, 32), la boîte d'objets (30, 32) est adaptée par modification de la valeur du paramètre d'état.

5. Procédé selon l'une des revendications précédentes,
**caractérisé en ce que**
pour des quantités partielles de segments parmi la quantité de tous les segments disponibles (34, 36, 38), on forme au moins une hypothèse d'objet respective qui comprend au moins un objet hypothétique, et **en ce que** l'on attribue à l'hypothèse d'objet une probabilité d'hypothèse, les probabilités d'hypothèse étant actualisées lors d'au moins une étape d'itération successive, et la somme des probabilités des hypothèses d'objet pour une quantité partielle de segments est égale à un.

6. Procédé selon l'une des revendications précédentes,
**caractérisé en ce que**
pour des quantités partielles de segments parmi la quantité de tous les segments disponibles (46 à 68, 102), on forme au moins une hypothèse d'objet qui comprend précisément un objet hypothétique, et **en ce que** l'on attribue à l'hypothèse d'objet une probabilité d'hypothèse qui est actualisée lors d'au moins une étape d'itération successive.

7. Procédé selon la revendication 5 ou 6,
**caractérisé en ce que**
l'on rejette des hypothèses d'objet lorsque leur probabilité d'hypothèse passe au-dessous d'une probabilité minimale ou lorsque l'un de leurs objets hypothétiques est rejeté,
et
**en ce que** les objets hypothétiques d'une hypothèse d'objet sont traités comme des objets reconnus univoquement et l'hypothèse d'objet est annulée lorsque leur probabilité passe au-dessus d'une probabilité minimale.

8. Procédé selon l'une des revendications précédentes,
**caractérisé en ce que**
l'on associe à chaque objet, en fonction de la classe d'objets associée, un type de modèle et une valeur pour le paramètre de modèle correspondant.

9. Procédé selon la revendication 8,
**caractérisé en ce que**
l'on prévoit au moins une classe d'objets pour des articles qui sont capables de se déplacer de façon identique dans toutes les directions du plan de l'image, et **en ce que** pour des objets auxquels on a attribué cette classe d'objets, on utilise un type de modèle et/ou un paramètre de modèle dépendant de la classe d'objets suivant lequel des mouvements possibles des objets dans toutes les directions sont traités de façon identique,
**en ce que** l'on prévoit au moins une classe d'objets pour des véhicules,
**en ce que** pour des objets auxquels on a associé l'une des classes d'objets pour véhicules, on utilise un type de modèle dans lequel un axe longitudinal d'objet est associé à l'objet, et
**en ce que** des mouvements de l'objet en direction de l'axe longitudinal de l'objet et ceux perpendiculaires à la direction de l'axe longitudinal d'objet sont pris en compte différemment dans le type de modèle.

10. Programme d'ordinateur comprenant des moyens formant code de programme pour mettre en oeuvre le procédé selon l'une des revendications 1 à 9, lorsque le programme est exécuté sur un ordinateur.

11. Produit de programme d'ordinateur comprenant des moyens formant code de programme qui sont mémorisés sur un support de données lisible à l'ordinateur pour mettre en oeuvre le procédé selon l'une des revendications 1 à 9, lorsque le produit de programme est exécuté sur un ordinateur.

12. Dispositif pour reconnaître et pour poursuivre des objets, comportant au moins un capteur, en particulier un scanneur à laser (12), réalisé pour détecter des images d'une zone de surveillance (14) comprenant des pixels (22, 24, 26) à résolution de vitesse ou de profondeur, et comportant un système de traitement de données (28), dans lequel la reconnaissance et la poursuite s'effectuent en utilisant un modèle respectif associé à l'un des objets pour l'évolution temporelle de paramètres d'état dynamiques qui décrivent au moins une propriété de l'objet spécifique au capteur, le modèle ayant un type de modèle et pouvant être paramétré par au moins un paramètre de modèle, le système de traitement de données (28) comprenant :
- des moyens pour former des segments (34, 36, 38) à partir des pixels (22, 24, 26) de l'image actuelle, les segments (34, 36, 38) comprenant chacun un pixel individuel (22, 24, 26) ou une certaine quantité de pixels (22, 24, 26) dont deux au moins sont définis comme appartenant au segment (34, 36, 38) en correspondance d'au moins un critère de segmentation, et qui ne présentent pas de pixels (22, 24, 26) communs entre eux,
- des moyens pour former un nouveau objet à partir d'au moins un segment (34, 36, 38), en vue de reformer des objets,
- des moyens pour associer des segments (34, 36, 38) à des objets déjà existants dans une image, lors de la reconnaissance et de la poursuite d'objets,
- des moyens pour classifier des objets en se basant sur plusieurs classes d'objets qui concernent au moins une propriété d'objet susceptible d'être déterminée à partir de l'une au moins des images à résolution de vitesse ou de profondeur,
- des moyens pour associer des segments (34, 36, 38) uniquement à de tels objets qui appartiennent à l'une des classes d'objets prédéterminées, pour reformer un objet, et
- des moyens pour former des objets hypothétiques d'une classe d'objets respective déterminée à partir des segments disponibles (34, 36, 38), objets auxquels est associée une probabilité pour l'existence d'un article correspondant à l'objet hypothétique et pour lesquels, dans au moins une itération successive du procédé, on procède à une reconnaissance et à une poursuite ainsi qu'à une actualisation de la probabilité,
**caractérisé en ce que**
il est prévu des moyens pour déterminer les probabilités d'hypothèse en utilisant des valeurs de qualité pour les objets hypothétiques correspondants, en appliquant des boîtes d'objets qui représentent une extension des objets dans le plan de l'image, qui présentent une certaine forme et une certaine taille et qui, quant à la forme et à la taille, correspondent à l'article représenté par l'objet, et en utilisant à titre de critère de qualité le nombre de pixels détectés associés à l'objet, en association avec un nombre de référence et/ou avec la distance moyenne entre les pixels associés à un objet et le bord de la boîte d'objets correspondante.
